# EUROPEAN PATENT APPLICATION

(11) **EP 2 355 102 A1**
(43) Date of publication of application: **10.08.2011**
(21) Application number: 10305106.6
(22) Date of filing: 02.02.2010
(51) Int. Cl.: G11B 7/135, G11B 7/09, G11B 7/007

(54) **Near-field optical recording medium and optical pickup for this optical recording medium**

(71) Applicant: Thomson Licensing, 92130 Issy-les-Moulineaux (FR)
(72) Inventor: Khrushchev, Sergey, 78089, Unterkirnach (DE); Kimmelmann, Stefan, 78052, Villingen-Pfaffenweiler (DE); von Riewel, Larissa, 78050, VS-Villingen (DE)
(74) Representative: Schmidt-Uhlig, Thomas

(57) **Abstract**

Near-field optical recording medium and optical pickup for this optical recording medium

The present invention relates to a near-field optical recording medium (10) and to an apparatus (1) and a method for reading from and/or writing to optical recording media, which is adapted to this near-field optical recording medium (10).

According to the invention, the near-field optical recording medium (10) includes magnetic servo marks (101) for tracking. The apparatus (1) includes one or more magnetic heads (30) for detecting these magnetic servo marks (101). Tracking is performed based on the detected magnetic servo marks (101).

## Description

The present invention relates to a near-field optical recording medium and to an apparatus for reading from and/or writing to optical recording media, which is adapted to this near-field optical recording medium.

Nowadays information technology is confronted with an increasing amount of data, due to more complex or multimedia applications. Accordingly, removable data storage devices with a high storage capacity are needed, e.g. for high resolution movies or video games. Well at the beginning of information technology, magnetic storage devices were favored, while nowadays, optical storage media such as CD (Compact Disk), DVD (Digital Versatile Disk) or BD (Blu-Ray Disk) are dominating the market for removable data storage media.

Information density in optical data storage is generally limited by the optical resolution of the read/write-system, which is mainly dependent on two parameters, namely the wavelength and the numerical aperture. Straightforward methods of increasing the optical resolution thus involve widening of the focused beam and opening angle, i.e. the numerical aperture NA, at the costs of lens complexity. The numerical aperture is limited by the marginal rays passing the objective lens. Further approaches are narrowing the allowable tilt margins for the optical storage media or reducing the wavelength of the scanning laser into the blue or near-UV range. However, it is not clear when the first UV-laser diodes will be designed. Therefore, the decrease of the wavelength is actually limited.

One possibility to further increase the data density is to use physical effects that allow to reach a resolution beyond the diffraction limit of the reading light. For example, a so-called super-resolution near field structure (Super-RENS) can be placed directly above a data layer of the optical recording medium, which significantly reduces the effective size of a light spot used for reading from and/or writing to the optical recording medium. Optical recording media with such a Super-RENS structure offer the possibility to increase the data density by a factor of 3 to 4 in one dimension compared to a regular optical recording medium. Super-RENS structures formed of a metal oxide or a polymer compound for recording of data and a phase change layer formed of a GeSbTe or a AgInSbTe based structure for reproducing of data are known from WO 2005/081242 and US 2004/0257968, respectively. A further example of a super-RENS structure is described in WO 2004/032123.

A different approach for reducing the focus spot size in an optical data storage system is using near-field optics with a high numerical aperture (NA>1). This high numerical aperture is generally achieved by help of a solid immersion lens (SIL). While conventional systems like CD, DVD or BD operate in the optical far-field regime, which is described by classical optics, the aforementioned new systems work in the optical near-field regime, which is described by near-field optics. For conventional systems the working distance, i.e. the air gap between the surface of the optical storage medium and the first optical surface of the read/write-head, usually the objective lens, is in the scale of 100µm. In contrast, systems making use of near-field optics need a very small working distance or air gap, which is in the scale of 50nm. An optical storage system for recording and/or reading making use of near-field optics is disclosed in WO 2005/104109 A1.

The above described approaches allow to reduce the marks size in a track direction of an optical recording medium. A reduction of the track pitch, which could additionally be used to further enlarge the capacity of an optical recording medium, has a negative effect on the generation of a tracking error signal when known tracking methods are used. For example, a push-pull signal is reduced to an extent that it cannot be reliably detected anymore. Also the three-beam method cannot be applied.

Accordingly, it is an object of the present invention to propose a near-field optical recording medium with a reduced track pitch, which allows to generate a reliable tracking error signal.

According to the invention, this object is achieved by a near-field optical recording medium that includes magnetic servo marks for tracking.

A main idea of the invention is to combine two different technologies, namely optical and magnetic data storage. In near-field storage systems the overall conditions are rather similar to the conditions found in magnetic storage systems using a flying-head. For example, the distance between the objective lens and the surface of the near-field optical recording medium is stabilized in the range of 20-50nm. Furthermore, the surface of the near-field optical recording medium fulfills roughly the same requirements in terms of tilt and roughness as the same requirements specified for hard disk drives. The invention thus proposes to provide a cover layer or a reflective layer consisting of a magnetic or a ferromagnetic hard material on a substrate. Servo marks are located in this layer. Advantageously, binary data are encoded in the magnetic servo marks, e.g. position data. The servo marks are arranged in concentric tracks or a track spiral coaxial to the concentric tracks or the track spiral of the optically stored data. The magnetic servo marks enable an improved tracking method, which is applicable even when the track pitch is reduced below the diffraction limit. In addition, the solution according to the invention can easily be implemented in a mass production technological line for data storage manufacture.

The application of a magnetic or a ferromagnetic layer opens up possibilities for further applications. One example is to use the ferromagnetic layer for retail-activation. The activation is performed by a magnetization step at the point of sale after buying a ROM optical recording medium in order to create the magnetic fields that are necessary for tracking. Before the magnetization no tracking is possible. A second example is to use the magnetic or ferromagnetic layer in combination with a magnetic head to establish a crash protection for an optical pickup.

It is a further object of the present invention to propose an apparatus and a method for reading from and/or writing to an optical recording media, which is adapted to the optical recording medium according to the invention.

According to the invention, an apparatus for reading from and/or writing to a near-field optical recording medium, which includes magnetic servo marks for tracking, has one or more magnetic heads for detecting the magnetic servo marks. The apparatus is capable of generating a reliable tracking signal even when the track pitch is reduced below the diffraction limit.

Similarly, a method for reading from and/or writing to a near-field optical recording medium, which includes magnetic servo marks for tracking, has the steps of:
- detecting magnetic servo marks arranged on the near-field optical recording medium; and
- performing tracking relative to a track of the optical recording medium based on the detected magnetic servo marks.

The use of magnetic servo marks for tracking allows to implement an improved tracking method, which is applicable even when the track pitch is reduced below the diffraction limit. Advantageously, a decoder is provided for decoding binary data encoded in the servo marks, e.g. position data. In this way the magnetic servo marks are not only used for tracking, but also contain additional data for other purposes, e.g. for positioning or for copy protection.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:
- Fig. 1: depicts an apparatus according to the invention for reading from a near-field optical recording medium;
- Fig. 2: shows a top view of a near-field optical recording medium according to the present invention; and
- Fig. 3: illustrates the operation principle of a magnetic head.

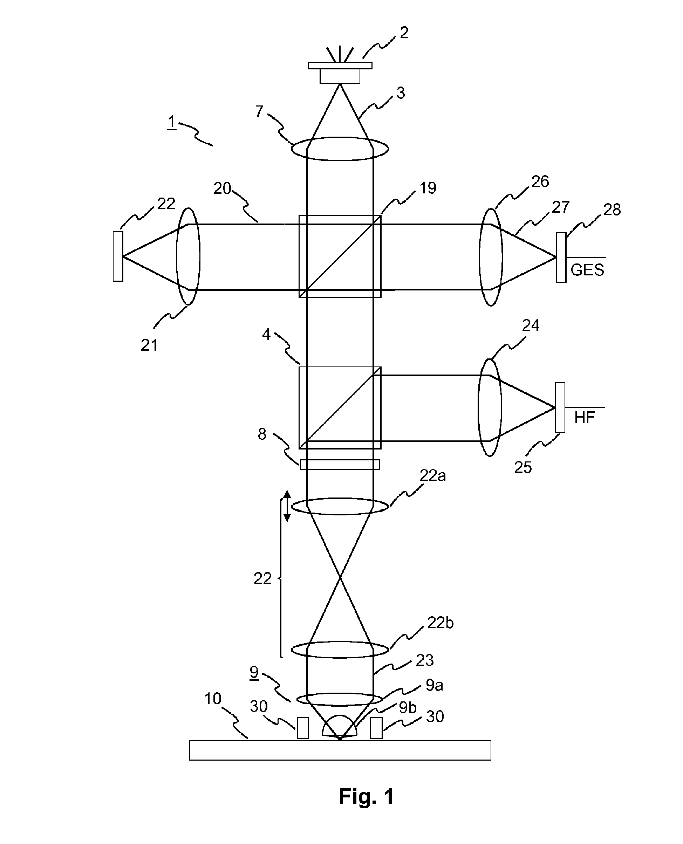

An apparatus 1 according to the invention for reading from a near-field optical recording medium is illustrated in Fig. 1. This apparatus is based on an apparatus proposed in C. A. Verschuren et al.: "Near-Field Recording with a Solid Immersion Lens on Polymer Cover-layer Protected Discs", Jap. J. Appl. Phys., Vol. 45 (2006), pp. 1325-1331. A reading light beam 3 emitted by a laser diode 2 is collimated by a collimating lens 7. A non-polarizing beam splitter 19 directs a small fraction 20 of the reading light beam 3 via a first objective lens 21 onto a forward detector 22 for measuring the output power of the laser diode 2. The main part of the reading light beam 3 passes a polarizing beam splitter 4 and a quarter wave plate 8, which converts the polarization of the reading light beam 3 into a circular polarization. The reading light beam 3 then passes through a telescope 22 for focus adjustment, which consists of two lenses 22a, 22b. A near-field lens 9 consisting of a second objective lens 9a and a solid immersion lens 9b finally directs the reading light beam 3 onto the surface of an optical recording medium 10. After interaction with the optical recording medium 10 the returning reading light beam 23 passes the quarter wave plate 8, which converts the polarization of the returning reading light beam 23 into a linear polarization.
Therefore, most of the returning reading light beam 23 is diverted by the polarizing beam splitter 4 into a detection branch. In the detection branch the returning reading light beam 23 is directed by a third objective lens 24 onto a detector 25 for generating a data signal HF. A small fraction 27 of the returning reading light beam 23 passes through the polarizing beam splitter 4, as the total reflection causes a slight rotation of the direction of polarization, and is directed by the non-polarizing beam splitter 19 and a fourth objective lens 26 onto a detector 28 for generating a gap error signal GES. For generating the gap error signal use is made of the fact that the amount of reflected light due to total internal reflection in the solid immersion lens 9b is proportional to the size of the air gap at least in the size range used for near-field storage.
For radial tracking relative to the optical recording medium 10 one or two magnetic heads 30 are provided in the vicinity of the objective lens 9. The magnetic heads 30 interact with magnetic tracking marks of the optical recording medium 10. While one magnetic head 30 is sufficient to enable tracking, two magnetic heads 30 are preferably used to enable differential tracking.
Further details on optical storage systems making use of near-field optics and the gap error signal are disclosed in F. Zijp et al.: "High-Density Near-Field Optical Recording With a Solid Immersion Lens, Conventional Actuator, and a Robust Air Gap Servo", IEEE Trans. Mag., Vol. 41 (2005), pp. 1042-1046.

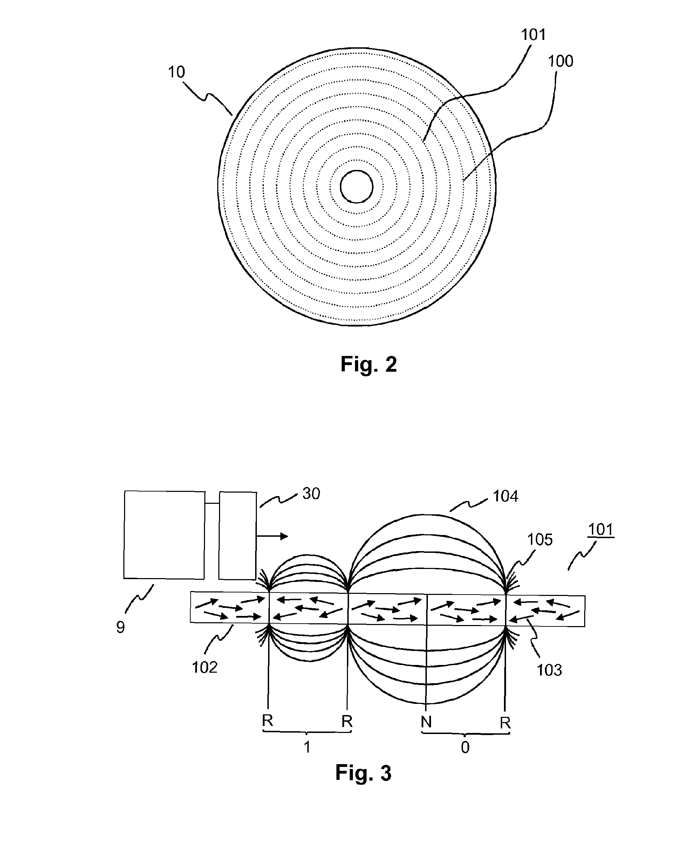

In Fig. 2 a top view of a near-field optical recording medium 10 according to the invention is shown. The optical recording medium 10 includes a plurality of magnetic marks 101 arranged in tracks 100. In the figure these tracks 100 are indicated by concentric circles. Of course, the tracks 100 can likewise form a spiral. Data are advantageously recorded in the areas between the tracks 100. Different techniques for forming the necessary patterned magnetic material are known, e.g. interference lithography, reactive ion etching or chemical mechanical polishing. A further method for forming a magnetic material with patterned magnetic and substantially non-magnetic zones is disclosed in US 6,168,845. In this document a magnetic layer is exposed to oxygen plasma through voids in a mask. Another solution is described in US 2009/0195904. A layer having a pattern of disjunct portions of magnetic material, which generates a corresponding pattern of local magnetic fields, is formed using a high viscosity polymer including magnetically stable nanoparticles.

The operation principle of the magnetic head 30 is illustrated in Fig. 3. The servo mark 101 consists of a sequence of magnetic regions 102, which are formed by magnetic grains 103. The resulting magnetic fields are indicated by magnetic field lines 104. In case of two subsequent magnetic regions 102 with different magnetizations a strong magnetic field and a field reversal is found at the boundary 105 between those magnetic regions 102. When a servo mark 101 is located below the magnetic head 30, it will generate an electrical signal in the magnetic head 30. The deviation of the position of the magnetic head 30 from the center of the desired track is measured whenever the magnetic head 30 passes over a servo mark 101. The tracking error signal is, therefore, generated at discrete points in time. The rate of these discrete points is determined by the number of prewritten servo marks 101 and the rotation speed of the optical recording medium 10. In addition, the presence and absence of field reversals is used to encode binary data, e.g. position data. In the figure, two subsequent boundaries 105 with field reversal R encode a '1', whereas a boundary 105 without field reversal N followed by a boundary 105 with field reversal R encodes a '0'.

## Claims

1. Near-field optical recording medium (10), **characterized in that** the near-field optical recording medium (10) includes magnetic servo marks (101) for tracking.

2. Near-field optical recording medium (10) according to claim 1, **wherein** the magnetic servo marks (101) are arranged in a cover layer or a reflective layer consisting of a magnetic or a ferromagnetic hard material.

3. Near-field optical recording medium (10) according to claim 1 or 2, **wherein** binary data are encoded in the magnetic servo marks (101).

4. Near-field optical recording medium (10) according to claim 3, **wherein** the binary data are position data.

5. Apparatus (1) for reading from and/or writing to a near-field optical recording medium (10) according to one of claims 1 to 4, **characterized in that** the apparatus (1) includes one or more magnetic heads (30) for detecting magnetic servo marks (101) arranged on the near-field optical recording medium (10).

6. Apparatus (1) according to claim 5, **further** including a decoder for decoding binary data encoded in the servo marks (101) .

7. Apparatus (1) according to claim 6, **wherein** the binary data is position data.

8. Method for reading from and/or writing to a near-field optical recording medium (10) according to one of claims 1 to 4, **having** the steps of:
- detecting magnetic servo marks (101) arranged on the near-field optical recording medium (10); and
- performing tracking relative to a track (100) of the optical recording medium (10) based on the detected magnetic servo marks (101).

9. Method according to claim 8, **further** having the step of decoding binary data encoded in the servo marks (101).

10. Method according to claim 9, **wherein** the binary data is position data.
